Europäisches Patentamt

(19) European Patent Office

Office européen des brevets

(11) Publication number: **0 075 403**
**B1**

(12) **EUROPEAN PATENT SPECIFICATION**

(45) Date of publication of patent specification: **14.05.86**

(51) Int. Cl.⁴: **B 01 D 46/26**

(21) Application number: **82304611.5**

(22) Date of filing: **02.09.82**

(54) Method and apparatus for fluid assisted filter doffing.

(30) Priority: **10.09.81 US 300870**

(43) Date of publication of application:
**30.03.83 Bulletin 83/13**

(45) Publication of the grant of the patent:
**14.05.86 Bulletin 86/20**

(84) Designated Contracting States:
**AT BE DE FR IT NL SE**

(56) References cited:
**CH-A- 568 780**
**US-A-4 226 715**

(73) Proprietor: **THE TERRELL MACHINE COMPANY**
**P.O. Box 240868 8801 South Boulevard**
**Charlotte North Carolina 28224 (US)**

(72) Inventor: **Kieronski, John Paul**
**8207 Carrolwood Drive**
**Charlotte North Carolina 28210 (US)**

(74) Representative: **Lees, Clifford et al**
**APPLEYARD, LEES & CO. 15, Clare Road**
**Halifax West Yorkshire, HX1 2HY (GB)**

Courier Press, Leamington Spa, England.

## Description

Technical Field and Background of the Invention This invention relates to a method and apparatus for assisting by fluid flow the doffing of an overlying porous layer of particulate matter (referred to as a "mat") from the surface of a filter medium, such as a fluid permeable filter screen. The method and apparatus according to this invention has application in many different types of condensers and fluid filters. The particular disclosure set out in this application relates, for illustrative purposes, to the fluid assisted doffing of a mat comprised of various types of particulate matter, such as fibers, dust and dirt commonly found in the textile processing industry and which for reasons of safety and health must be removed from the environment. This is usually accomplished by filtering the air within which the dirt and fibers are entrained through a filtering apparatus.

One of the ways this is accomplished is by filtering the particulate laden air through a filter medium such as a screen. Filtration takes place not only by the passage of the air through the filter medium, but after a mat of particulate matter builds up on the filter medium, the mat itself acts as an additional filter medium of enhanced filtering capacity. Prior inventions by the present assignee have dramatically increased the efficiency of such filters by optimizing the size of the openings in the filter medium and then using the filter medium essentially as a filter support on which an overlying porous mat having enhanced filtering capacity is built.

However, the mat must be removed periodically from the underlying filter support so that the thickness of the mat does not substantially exceed a point where the filtration efficiency ceases to improve. This is also necessary because the increasing thickness of the mat progressively restricts the flow of air through the filter, causing filtration capacity at any given energy level to decrease. When the mat is removed from only a portion of the filter screen, the pressure drop through this area decreases relative to the portion of the filter screen still carrying the mat. As a result, most of the air entering the filter will move toward the area of least resistance and pass through the clean filter medium. This results in a greatly reduced filtration efficiency through this area until the mat again begins to accumulate on the underlying filter medium.

This known deficiency in prior art filtering processes has been adapted and turned into a useful phenomenon in the recent United States Patent No. 4,226,715 issued to the present assignee, Terrell Machine Company. As disclosed in the above-referenced patent, particulate laden air is used to build an overlying mat of enhanced filtering capacity over a filter screen which acts primarily as a filter support for the mat. Because of the structure of the filter, air is not permitted to exit the filter enclosure until it has passed through this overlying mat. Therefore, periodic decrease in filtered air quality as a result of some air passing through the clean filter screen has been eliminated.

However, in order for a mat to be quickly and efficiently built up over the doffed portion of the filter screen, the screen must be substantially cleaned each time it is doffed. If this is not done, areas of the filter screen may remain blocked by contaminates which will prevent air from passing through that section of the screen and will therefore prevent the proper buildup of the mat. This occurrence increases the amount of energy required and decreases the filtration capacity of the filter. Should the blockage become dislodged at some later stage in the filtration process, a substantial decrease in filtering efficiency would occur as the air is passed through this bare area instead of through the overlying mat, as is desired.

Certain materials are inherently easy to doff under optimum conditions from an underlying filter screen. For example, textile fibers accompanied by relatively low percentages of dust and dirt form an overlying mat which has a high degree of internal cohension. Thus a conventional doffing roll having radially extending elastomeric vanes can easily remove the entire mat leaving a completely clean filter screen. However, in conditions of high humidity and/or with a mat having a relatively large percentage of dust and dirt, the action of doffing the mat can produce a very thin layer of mud-like substance which coats the filter screen and completely blocks large areas of the screen against the passage of air. The presence of fibers in this "mud" provides further strength, causing it to cling tenaciously to the filter screen. This problem is even more serious in environments where the particulate matter being filtered from the air is comprised principally of dust, dirt, fly ash, flour or the like.

Experimentation with this problem has resulted in the development of a way to prevent blockage of the filter screen. The mat is pushed away from the screen by passing a stream of air through the screen and against the underside of the mat. This has been accomplished while completely preventing the passage of any contaminated air into the environment.

A method of utilising an airstream flowing in an outward direction for assisting in doffing a mat of fibrous material from the surface of a filter drum has been proposed in Swiss Patent Specification 568 780. However, the air which has passed out through the filter drum to doff the fibrous mat will itself be dust-laden. In modern factory conditions, it would not be acceptable to discharge dust-laden air into the surrounding environment. The present invention ensures that air leaving the apparatus will be substantially dust free.

In one of the arrangement described in Swiss Patent 568 780, the air which is used for doffing the fibrous mat has already been pulled through the filter medium in a first filtering action, but it is dirtied again at the doffing operation. Large air filtration apparatus requires the expenditure of considerable energy pulling the air through the filter medium and hence the method described in the Swiss specification is wasteful of energy. In an alternative also disclosed in Swiss Patent 568 780, a separate source of air is used for doffing the fibrous mat, but that also wastes energy and adds to the cost of the apparatus.

Summary of the Invention

According to a first aspect of the invention a method of filtering particulate matter from a fluid in which an overlying porous layer of particulate matter is removed from a filter medium support at a doffing position by fluid from the downstream side of the filter medium support which is directed through the filter medium support to the upstream side thereof and against the overlying porous layer of particulate matter, whereby the overlying porous layer is removed from the filter medium support is characterised in that after the fluid has been used to remove the overlying porous layer, that fluid is then passed back through the overlying porous layer from the upstream side to the downstream side thereof at a position where the porous layer has not yet arrived at the doffing position.

Preferably some of the fluid which is being filtered is first diverted to the downstream side of the filter medium support from the upstream side thereof, through a part of the filter medium support on which there is no overlying porous layer, to provide the fluid which is to remove the overlying porous layer from the filter medium support. It is further preferred that after the overlying porous layer has been removed from the filter medium support, it is mechanically directed away from the filter medium.

According to a second aspect of the invention a fluid filter of the type wherein a particulate laden fluid stream is filtered through a filter medium support from the upstream to the downstream side thereof to form an overlying porous layer of particulate matter on the upstream side of the support, and fluid assisted doffing means are provided for removing the overlying porous layer of particulate matter from the filter support is characterised in that the doffing means comprises means for diverting fluid from the upstream side of the filter medium to beneath said overlying porous layer of particulate matter and said filter medium at a position closely adjacent to a doffing position, at which the porous layer of particulate matter is to be removed therefrom, and means for urging the fluid against the underside of the porous layer at the doffing position, and for subsequently causing the fluid to pass through said overlying layer from the upstream side to the downstream side thereof at a position where the porous layer has not yet arrived at the doffing position.

It is preferred that the doffing means includes mechanical means for directing the porous layer away from the filter medium support for disposal. It is further preferred that the filter includes a rotatably mounted cylindrical drum and that the filter medium support covers the circumferential periphery of the drum and comprises a screen.

According to another preferred feature of this aspect of the invention there is also provided a rotatably mounted roller extending along the axial length of the drum closely adjacent to the outer peripheral surface thereof, and means positioned on the surface of the roller for engaging and directing the porous layer of particulate matter away from the drum. Preferably, the roller has a plurality of radially outwardly extending flexible vanes thereon for engaging with the screen and for directing the porous layer of particulate matter away from the drum, the vanes on the roller being so arranged that they successively sealingly engage with the screen over a doffing chamber, thereby diverting the fluid through the screen into the doffing chamber, around the vane which is sealingly engaged against the screen and back through the screen from the downstream to the upstream side thereof and through the overlying porous layer of particulate matter.

It is still further preferred that on the downstream side of the filter support there are first and second filter chambers; sealing means preventing direct fluid flow from one filter chamber to the other, and a doffing chamber positioned on the downstream side of the screen at the doffing position where the overlying porous layer is to be removed from the screen and communicating through the screen with the upstream side thereof, the doffing chamber being sealed against direct fluid communication with the first and second filter chambers on the downstream side of the screen.

In a preferred construction, the filter includes an enclosed housing having a fluid inlet and a fluid outlet therein; the filter medium support being positioned with the enclosed housing, there being a filter-making zone defined with the enclosed housing by fluid flow into the fluid inlet and through a first predetermined part of the filter medium support for collecting the entrained particulate matter into the overlying porous layer; and a filtration zone defined within the enclosed housing by a fluid flow through a second predetermined part of the filter medium support and through the filter outlet, the second predetermined part of the filter medium support having thereon the overlying porous layer of particulate matter made in the filter-making zone.

Brief Description of the Drawings

Two embodiments of the invention will now be described by way of examples only with reference to the accompanying drawings, in which:—

Figure 1 is a schematic cross-sectional view of one preferred embodiment of the apparatus according to this invention on a cylindrical drum-type fluid filter;

Figure 2 is an enlarged cross-sectional view of a preferred embodiment of the apparatus according to the present invention, and

Figure 3 is an enlarged cross-sectional view of another preferred embodiment of the apparatus according to the present invention.

Description of the Preferred Embodiment

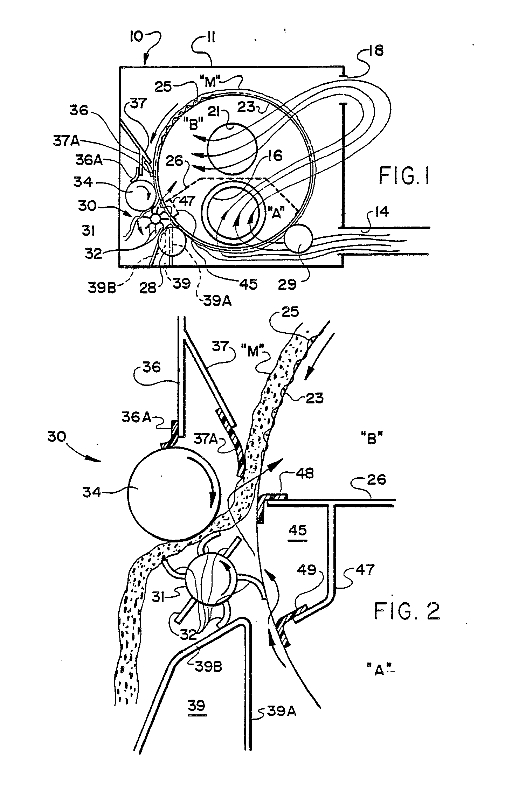

Referring now specifically to the drawings, Figure 1 shows a preferred embodiment of the fluid assisted doffing means according to the present invention in place on a cylindrical drum-type filter.

The filter, designated at broad reference numeral 10, includes a housing 11 enclosing the filtration components and including four side walls and two end walls. Inlet 14 admits air into the housing 11. Two air outlets 16 and 21 are provided in opposing end walls of the housing 11. Positioned within housing 11 is a cylindrical drum 23 which is preferably formed of expanded metal. Drum 23 is covered around its entire circumferential periphery by a filter support, comprising a filter screen 25 and is mounted for rotation by means of rollers 28 and 29. Rollers 28 and 29 have a relatively short axial length and are mounted on opposing ends of housing 11 so that the opposing, extreme edge portions of cylindrical drum 23 ride thereon. Drum 23 is preferably driven by a sprocket gear (not shown) which mateingly engages with a chain (not shown) extending around one circumferential edge of drum 23. Positioned within the interior of drum 23 is an imperforate metal shroud 26 which defines an enclosed filter chamber "A" which serves as a filtermaking zone and which is physically separate from the remainder of the interior of the drum 23, which defines a filter chamber "B" and serves as the filtration zone of the filter.

Still referring to Figure 1, air enters the filter housing 11 through air inlet 14. Air passes through the filter screen 25 from the upstream to the downstream side as is illustrated by arrows. In so doing, an overlying porous layer of particulate matter begins building up on the filter screen 25 to form a mat "M". The air then passes through outlet 16 and is conveyed by a conduit (not shown) to inlet 18 and into the enclosure 11 where it passes through mat "M", the underlying filter screen 25 and the drum 23. This constitutes the primary filtering operation. Air then exits the filter housing 11 through outlet 21 in a highly filtered state. A blower (not shown) downstream of outlet 21 pulls air through the filter 10.

As mentioned above, filter screen 25 must be cleaned in order to expose a clean filter surface on which mat "M" again begins to form. The process of removing mat "M" from filter screen may be continuous with the drum 23 rotating at a predetermined slow speed, or the mat "M" may be removed periodically by sensing the pressure differential on upstream and downstream sides of the drum 23 and causing the drum to rotate when a given pressure differential is reached.

The air assisted doffing means according to the present invention is shown in Figure 1 at broad reference numeral 30. A doffing roller 31 is rotatably mounted closely adjacent the periphery of drum 23. A plurality of flexible elastomeric vanes 32 are mounted on and extend radially outwardly from doffing roller 31.

A sealing roller 34 is positioned for rotation above doffing roller 31. Baffle plates 36 and 37 are positioned above sealing roller 34 and have flexible elastomeric seals 36A and 37A, respectively, attached to their free ends. Seal 36a engages the surface of sealing roller 34 and seal 37a engages the mat "M" as it moves with the drum 23 toward doffing roller 31. Seal 37A also keeps mat "M" from detaching itself from screen 25 prior to reaching the doffing chamber, as described below.

A chamber baffle 39 is positioned below doffing roller 31. The inwardly facing wall 39A of chamber baffle 39 extends at a tangent to the surface of drum 23 and defines therebetween a narrowed throat which creates a venturi effect as air on the upstream side of drum 23 moves from inlet 14 through this area. An upwardly facing wall 39B of chamber baffle 39 extends radially inwardly towards drum 23 and forms a surface on which successive vanes 32 sealingly engage as doffing roller 31 rotates. As is shown in Figure 2, vanes 32 of doffing roller 31 are of such length that, as they rotate, they successively sealingly engage against wall 39B, the outer surface of filter screen 25 on drum 23 and finally against mat "M" which is removed from filter screen 25 and is trapped between the rotating sealing roller 34 and rotating doffing roller 31. Vanes 32 are spaced sufficiently close together on doffing roller 31 so that successive vanes 32 engage the surfaces to be sealed before the preceding vane 32 disengages from the same surface.

Still referring to Figure 2, a doffing chamber 45 is shown on the downstream side of drum 23 in substantial radial alignment with doffing roller 31. Doffing chamber 45 is defined by one of the peripheral edges of shroud 26 and is angled to extend downwardly and radially outwardly into close proximity with drum 23. An elastomeric seal 48 is secured to the outwardly extending peripheral edge of shroud 26 and sealingly engages against the downstream side of drum 23. Likewise, an elastomeric seal 49 is secured to plate 47 and also sealingly engages against the downstream side of drum 23. The space enclosed by shroud 26 between plate 47 and drum 23, defines the doffing chamber 45. As is shown in Figure 2, seals 48 and 49 prevent direct fluid flow between filter chamber "A" and filter chamber "B". All of the above-described elements extend substantially the entire length of the filter screen 25 which covers drum 23.

The vacuum pressure upstream of filter chamber "A" is substantially less than the vacuum pressure in filter chamber "B". This pressure drop is caused by the presence of mat "M" on screen 23 which restricts the free flow of air therethrough. Therefore, a pressure differential is created on opposite sides of the area defined by doffing chamber 45. Because at least one of the vanes 32 is always in sealing engagement with filter screen 25 across the opening of the doffing chamber 45, air upstream of filter chamber "A" is forced to bypass the vane 32 by passing through the filter screen 25 and into the doffing chamber 45, and around the vane 32. The air in doffing chamber 45 must exit doffing chamber 45 through the filter screen 25 on the other side of the vane 32. Because of the relatively high vacuum pressure in filter chamber "B", the air is urged in that direction. In order to reach filter chamber "B", the air must pass through mat "M" immediately above doffing roll 31. The movement of this air in this manner mechanically urges the mat away from filter screen 25. In so doing, the air passes through each of the openings in screen 25, clearing them of dirt, dust and other debris. Seals 36A and 37A form a block preventing movement of the air around the circumference of the drum 23. For this reason, the air in the space defined between baffle plates 36 and 37 must pass back through mat "M" from the upstream to the downstream side thereof above the point where it has been physically removed from screen 25. In so doing, the air is filtered in precisely the same manner as any other air which passes through mat "M" and into filter chamber "B". Thus, the same air which has been used to remove mat "M" is thereafter filtered with the same degree of efficiency as air which is not used to assist in removing mat "M". The doffing roller 31 serves the primary purpose of directing the removed mat "M" away from the surface of drum 23. The impingement of mat "M" between rotating doffing roller 31 and rotating sealing roller 34 causes the mat to be deposited in a suitable place for disposal.

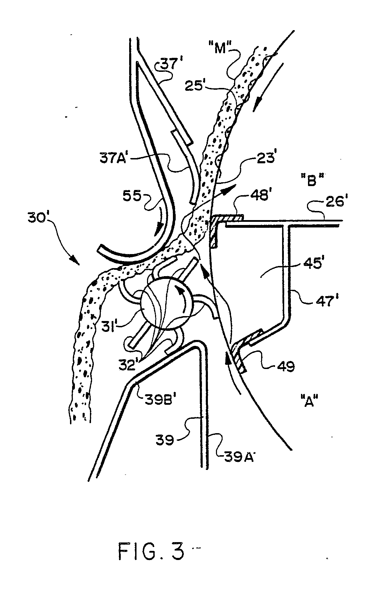

In an alternative embodiment of the invention, shown in Figure 3, sealing roller 34 is eliminated. In its place an elongate curved sealing plate 55 is positioned in close proximity to doffing roller 31'. Sealing plate 55 preferably has a smooth, polished outer surface so that mat "M" slides easily along the curved surface as it is directed away from screen 25' by the action of the air on its underside. The remaining elements in Figure 3 correspond to those shown in Figure 2 and are therefore indicated by prime reference numerals corresponding to those shown in Figure 2.

The principle of the fluid assisted doffing means 30' as disclosed above lends itself to application in a variety of constructions and uses. For example, planar filter screens and rotating filter "disks" can likewise be periodically cleaned of an overlying mat of particulate matter by using the concepts according to the present invention. The amount and velocity of air impacting the underside of the mat can be easily regulated without interfering with the overall operation of the filter.

**Claims**

1. A method of filtering particulate matter from a fluid in which an overlying porous layer of particulate matter (M) is removed from a filter medium support at a doffing position by fluid from the downstream side of the filter medium support which is directed through the filter medium support to the upstream side thereof and against the overlying porous layer of particulate matter, whereby the overlying porous layer is removed from the filter medium support, characterised in that after the fluid has been used to remove the overlying porous layer that fluid is then passed back through the overlying porous layer from the upstream side to the downstream side thereof at a position where the porous layer has not yet arrived at the doffing position.

2. A method of filtering particulate matter from a fluid as claimed in Claim 1, characterised in that some of the fluid which is being filtered is first diverted to the downstream side of the filter medium support from the upstream side thereof, through a part of the filter medium support on which there is no overlying porous layer to provide the fluid which is used to remove the overlying porous layer from the filter medium support.

3. A method of filtering particulate matter from a fluid as claimed in Claim 1 or Claim 2, characterised in that after the overlying porous layer has been removed from the filter medium support it is mechanically directed away from the filter medium.

4. A fluid filter of the type wherein a particulate laden fluid stream is filtered through a filter medium support (25) from the upstream to the downstream side thereof to form an overlying porous layer of particulate matter on the upstream side of the support, and fluid assisted doffing means (30) are provided for removing the overlying porous layer of particulate matter from the filter support, characterised in that the doffing means comprises means (47, 49) for diverting fluid from the upstream side of the filter medium (25) to beneath said overlying porous layer of particulate matter and said filter medium at a position closely adjacent to a doffing position, at which the porous layer of particulate matter is to be removed therefrom, and means for urging the fluid against the underside of the porous layer at the doffing position, and for subsequently causing the fluid to pass through said overlying layer from the upstream side to the downstream side thereof at a position where the porous layer has not yet arrived at the doffing position.

5. A fluid filter as claimed in Claim 4, characterised in that the doffing means (30) includes mechanical means (34, 31, 32) for directing the porous layer away from the filter medium support (25) for disposal.

6. A fluid filter as claimed in Claim 4 or Claim 5, characterised in that the filter includes a rotatably mounted cylindrical drum (23) and that the filter medium support (25) covers the circumferential periphery of the drum (23) and comprises a screen.

7. A fluid filter as claimed in Claim 6, characterised in that there is also provided a rotatably mounted roller (31) extending along the axial length of the drum closely adjacent to the outer peripheral surface thereof, and means (32) positioned on the surface of the roller (31) for engaging and directing the porous layer of particulate matter away from the drum (23).

8. A fluid filter as claimed in Claim 7, characterised in that the roller (31) has a plurality of radially outwardly extending flexible vanes (32) thereon for engaging with the screen (25) and for directing the porous layer of particulate matter away from the drum (23), and vanes on the roller being so arranged that they successively sealingly engage with the screen over a doffing chamber, thereby diverting the fluid through the screen into the doffing chamber, around the vane which is sealingly engaged against the screen and back through the screen from the downstream to the upstream side thereof and through the overlying porous layer of particulate matter.

9. A fluid filter as claimed in any one of Claims 4 to 8, characterised in that on the downstream side of the filter support there are first and second filter chambers (A, B); sealing means (48) preventing direct fluid flow from one filter chamber to the other, and a doffing chamber (45) positioned on the downstream side of the screen (25) at the doffing position where the overlying porous layer is to be removed from the screen and communicating through the screen with the upstream side thereof, the doffing chamber (45) being sealed against direct fluid communication with the first and second filter chambers (A, B) on the downstream side of the screen.

10. A fluid filter as claimed in any one of Claims 4 to 9, characterised in that it includes an enclosed housing (11) having a fluid inlet (14) and a fluid outlet (21) therein; the filter medium support (23) being positioned with the enclosed housing, there being a filter-making zone (A) defined within the enclosed housing by fluid flow into the fluid inlet (14) and through a first predetermined part of the filter medium support (23) for collecting the entrained particulate matter into the overlying porous layer; and a filtration zone (B) defined within the enclosed housing (11) by a fluid flow through a second predetermined part of the filter medium support (23) and through the filter outlet (21), the second predetermined part of the filter medium support having thereon the overlying porous layer of particulate matter made in the filter making zone.

**Revendications**

1. Procédé de filtrage de matière particulaire véhiculée par un fluide, dans lequel on enlève une couche poreuse surjacente de matière particulaire (M) d'un support d'élément filtrant en un point d'enlèvement à l'aide d'un fluide provenant du côté aval du support d'élément filtrant et qui est dirigé à travers ce support d'élément filtrant vers le côté amont de celui-ci et contre la couche poreuse de matière particulaire surjacente, de manière que cette couche de matière particulaire surjacente se détache du support d'élément filtrant, ce procédé étant caractérisé par le fait qu'après utilisation du fluide pour enlever la couche poreuse surjacente on fait passer ce fluide en retour à travers la couche poreuse surjacente vers le côté aval de celle-ci en un point où la couche poreuse n'est pas encore parvenue au point d'enlèvement.

2. Procédé de filtrage de matière particulaire à partir d'un fluide selon la Revendication 1, caractérisé par le fait qu'une partie du fluide qui est en cours de filtrage est d'abord détournée vers le côté aval du support d'élément filtrant à partir du côté amont de ce support, en traversant une partie déterminée du support d'élément filtrant sur laquelle ne se trouve aucune couche poreuse surjacente, afin de fournir le fluide qui est utilisé pour enlever la couche poreuse surjacente dudit support d'élément filtrant.

3. Procédé de filtrage de matière particulaire à partir d'un fluide selon l'une ou l'autre des Revendications 1 et 2, caractérisé par le fait qu'après avoir enlevé la couche poreuse surjacente du support d'élément filtrant on l'éloigne mécaniquement de l'élément filtrant.

4. Filtre pour fluides, du genre dans lequel on procède au filtrage d'un courant de fluide chargé de matière particulaire à travers un support d'élément filtrant (25), entre le côté amont et le côté aval de ce support, des moyens d'enlèvement (30) étant prévus pour détacher la couche poreuse surjacente de matière particulaire dudit support d'élément filtrant, ce filtre étant caractérisé par le fait que les moyens d'enlèvement précités comprennent des éléments (47, 49) propres à détourner le fluide entre le côté supérieur de l'élément filtrant (25) et le dessous de ladite couche poreuse surjacente de matière particulaire et ledit élément filtrant en un point très proche d'un point d'enlèvement, où la couche poreuse de matière particulaire doit être détachée de cet élément filtrant, ainsi que des moyens propres à diriger le fluide contre le côté inférieur de la couche poreuse au point d'enlèvement, et à faire ensuite passer ce fluide à travers ladite couche poreuse surjacente entre le côté amont et le côté aval de celle-ci en un point où la couche poreuse n'est pas encore parvenue au point d'enlèvement.

5. Filtre pour fluides selon la Revendication 4, caractérisé par le fait que les moyens d'enlèvement (30) comprennent des organes mécaniques (34, 31, 32) destinés à éloigner la couche poreuse du support (25) de l'élément filtrant pour la mettre au rebut.

6. Filtre pour fluides selon l'une ou l'autre des Revendications 4 ou 5, caractérisé par le fait que le filtre comprend un tambour cylindrique (23) monté rotatif et que le support (25) de l'élément filtrant couvre la périphérie circonférentielle du tambour (23) et comprend un tamis (25).

7. Filtre pour fluides selon la Revendication 6, caractérisé par le fait qu'il est également prévu un rouleau (31) monté rotatif et qui s'étend sur toute la longueur axiale du tambour (23), à proximité immédiate de la surface périphérique externe de ce tambour, ainsi que des moyens (32) agencés sur la surface du rouleau (31) pour attaquer la couche poreuse de matière particulaire afin de l'éloigner du tambour (23).

8. Filtre pour fluides selon la Revendication 6, caractérisé par le fait que le rouleau (31) est pourvu de plusieurs pales souples (32) qui font saillie radialement vers l'extérieur et sont destinées à attaquer le tamis (25) et à éloigner du tambour (23) la couche poreuse de matière particulaire, certaines pales portées par ce rouleaux étant disposées de telle sorte qu'elles s'appuient successivement de manière étanche contre le tamis au-dessus d'une chambre d'enlèvement (45), ce qui détourne le fluide à travers le tamis vers l'extérieur de cette chambre d'enlèvement, en passant autour de la pale qui s'appuie momentanément de façon étanche contre le tamis (25), pour circuler en retour à travers ce tamis entre le côté aval et le côté amont du tamis, ainsi qu'à travers la couche poreuse surjacente de matière particulaire.

9. Filtre pour fluides selon l'une quelconque des Revendications 4 à 8, caractérisé par le fait qu'il est prévu, sur le côté aval du support de filtre, des première et seconde chambres de filtrage (A, B), des joints d'étanchéité (48) destinés à empêcher un écoulement direct du fluide entre ces chambres, ainsi qu'une chambre d'enlèvement (45) située sur le côté aval du tamis (25) au point d'enlèvement où la couche poreuse surjacente doit être détachée du tamis et qui communique à travers de tamis avec le côté amont de celui-ci, ladite chambre d'enlèvement (45) étant séparée desdites première et seconde chambres de filtrage (A, B) de manière étanche, afin d'empêcher toute communication directe du fluide avec ces chambres du côté aval du tamis.

10. Filtre pour fluides selon l'une quelconque des Revendications 4 à 9, caractérisé par le fait qu'il comprend un carter fermé (11) pourvu d'une entrée (14) pour le fluide et d'une sortie (21) pour le fluide, le support (23) de l'élément filtrant étant placé à l'intérieur du carter fermé, tandis qu'une zone de filtrage (A) est définie à l'intérieur du carter fermé par l'écoulement du fluide qui pénètre par l'entrée (14) et traverse une première partie déterminée du support (23) d'élément filtrant afin de recueillir la matière particulaire entraînée dans la couche poreuse surjacente, tandis qu'une zone de filtrage (B) est formée à l'intérieur du carter fermé (11) par un écoulement de fluide à travers une seconde partie déterminée du support (23) de l'élément filtrant et à travers la sortie (21) du filtre, ladite seconde partie déterminée du support d'élément filtrant portant la couche poreuse surjacente de matière particulaire formée dans la zone de filtrage.

**Patentansprüche**

1. Verfahren zum Ausfiltern von teilchenförmigem Material aus einem Strömungsmittel, wobei eine aufliegende, poröse Schicht aus teilchenförmigem Material (M) von einem Träger für ein Filtermedium an einer Abnahmestelle mit Hilfe eines von der stromabwärtigen Seite des Trägers für das Filtermedium kommenden Strömungsmittels entfernt wird, wobei das Strömungsmittel durch den Träger für das Filtermedium zu dessen stromaufwärtiger Seite und gegen die aufliegende poröse Schicht aus teilchenförmigem Material geleitet wird, wodurch die aufliegende poröse Schicht von dem Träger für das Filtermedium entfernt wird, dadurch gekennzeichnet, daß das Strömungsmittel, nachdem es zur Entfernung der aufliegenden porösen Schicht verwendet wurde, von der stromaufwärtigen Seite durch die aufliegende poröse Schicht zur stromabwärtigen Seite zurückgeleitet wird, und zwar in einer Position, in welcher die poröse Schicht noch nicht an der Abnahmestelle angekommen ist.

2. Verfahren zum Ausfiltern von teilchenförmigem Material aus einem Strömungsmittel nach Anspruch 1, dadurch gekennzeichnet, daß ein Teil des Strömungsmittels, das gefiltert wird, zunächst von der stromaufwärtigen Seite des Trägers für das Filtermedium zu dessen stromabwärtiger Seite abgelenkt wird, und zwar durch einen Teil des Trägers für das Filtermedium, auf welchem sich keine aufliegende poröse Schicht befindet, um das Strömungsmittel zu erzeugen, das zur Entfernung der aufliegenden porösen Schicht von dem Träger des Filtermediums verwendet wird.

3. Verfahren zum Ausfiltern von teilchenförmigem Material aus einem Strömungsmittel nach Anspruch 1 oder 2, dadurch gekennzeichnet, daß die aufliegende poröse Schicht, nachdem sie von dem Träger für das Filtermedium entfernt worden ist, mechanisch vom Filtermedium weggeleitet wird.

4. Strömungsmittelfilter des Typs, bei dem ein mit Teilchen beladener Strömungsmittelstrom von der stromaufwärtigen zu der stromabwärtigen Seite eines Trägers (25) für ein Filtermedium gefiltert wird, um eine aufliegende poröse Schicht aus teilchenförmigem Material auf der stromaufwärtigen Seite des Trägers zu erzeugen, und worin strömungsmittelunterstützte Abnahmeeinrichtungen (30) zur Entfernung der aufliegenden porösen Schicht des teilchenförmigen Materials vom Filterträger vorgesehen sind, dadurch gekennzeichnet, daß die Abnahmeeinrichtung Mittel (47, 49) zum Ablenken des Strömungsmittels von der stromaufwärtigen Seite des Filtermediums (25) bis unterhalb der aufliegenden porösen Schicht des teilchenförmigen Materials und des Filtermediums an einer Position, die unmittelbar an einer Abnahmestellung, an der die poröse Schicht aus teilchenförmigem Material entfernt werden soll, anliegt; sowie Mittel aufweist, um das Strömungsmittel an der Abnahmestelle gegen die Unterseite der porösen Schicht zu drücken und anschließend das Strömungsmittel von der stromaufwärtigen Seite zu der stromabwärtigen Seite der aufliegenden Schicht passieren zu lassen, und zwar in einer Position, in der die poröse Schicht noch nicht an der Abnahmestelle angekommen ist.

5. Strömungsmittelfilter nach Anspruch 4, da-

durch gekennzeichnet, daß die Abnahmeein-richtung (30) mechanische Mittel (34, 31, 32) zum Wegleiten von dem Träger (25) für das Filtermedium und zur Beseitigung aufweist.

6. Strömungsmittelfilter nach Anspruch 4 oder 5, dadurch gekennzeichnet, daß das Filter eine drehbar angebrachte zylindrische Trommel (23) aufweist und daß der Träger (25) für das Filtermedium den Umfangsrand der Trommel (23) bedeckt und ein Sieb darstellt.

7. Strömungsmittelfilter nach Anspruch 6, dadurch gekennzeichnet, daß auch eine drehbar angebrachte Walze (31) vorgesehen ist, die sich entlang der axialen Länge der Trommel in unmittelbarer Nähe von dessen äußerer Umfangsfläche erstreckt, und daß Mittel (32) auf einer Oberfläche der Walze (31) vorgesehen sind, die die poröse Schicht aus teilchenförmigem Material ergreifen und von der Trommel (23) wegleiten.

8. Strömungsmittelfilter nach Anspruch 7, dadurch gekennzeichnet, daß die Walze (31) mehrere, radial nach außen ragende flexible Flügel (32) aufweist, die mit dem Sieb (35) in Eingriff kommen und die die poröse Schicht aus teilchenförmigem Material von der Trommel (23) wegleiten, wobei die Flügel an der Walze so angeordnet sind, daß sie nacheinander mit dem Sieb über einer Abnahmekammer dichtschließend in Eingriff kommen und auf diese Weise das Strömungsmittel durch das Sieb in die Abnahmekammer, um den Flügel, der dichtschließend mit dem Sieb in Eingriff steht und zurück durch das Sieb, von dessen stromabwärtiger zur stromaufwärtigen Seite sowie durch die aufliegende poröse Schicht aus teilchenförmigem Material ablenken.

9. Strömungsmittelfilter nach einem der Ansprüche 4 bis 6, dadurch gekennzeichnet, daß auf der stromabwärtigen Seite des Filterträgers eine erste und eine zweite Filterkammer (A, B); Abdichtmittel (48), die einen direkten Fluß des Strömungsmittels von einer Filterkammer in die andere verhindern, sowie eine Abnahmekammer (45) vorgesehen sind, die an der stromabwärtigen Seite des Siebs (25) in der Abnahmeposition angeordnet ist, wobei die aufliegende poröse Schicht vom Sieb entfernt werden soll und die durch das Sieb mit dessen stromaufwärtiger Seite in Verbindung steht, wobei die Abnahmekammer (45) gegen eine direkte Strömungsmittelverbindung mit der ersten und der zweiten Filterkammer (A, B) auf der stromabwärtigen Seite des Siebs abgedichtet ist.

10. Strömungsmittelfilter nach einem der Ansprüche 4 bis 9, dadurch gekennzeichnet, daß es ein geschlossenes Gehäuse (11) mit einem Strömungsmitteleinlaß (14) und einem Strömungsmittelauflaß (21); einen Träger (23) für das Filtermedium, der im geschlossenen Gehäuse angeordnet ist, wobei eine filteraufbauende Zone (A) innerhalb des geschlossenen Gehäuses durch Strömungsmittelfluß in den Strömungsmitteleinlaß (14) und durch einen ersten vorherbestimmten Teil des Trägers (23) für das Filtermedium definiert ist, um das mitgeführte teilchenförmige Material in der aufliegenden porösen Schicht zu sammeln; und eine Filterzone (B), die innerhalb des geschlossenen Gehäuses (11) durch einen Strömungsmittelfluß durch einen zweiten vorherbestimmten Teil des Trägers (23) für das Filtermedium und durch den Filterauslaß (21) bestimmt ist, wobei der zweite vorherbestimmte Teil des Trägers für das Filtermedium die aufliegende poröse Schicht aus teilchenförmigem Material trägt, die in der Filterauf-bauzone erzeugt wurde, aufweist.

FIG.1

FIG. 2

FIG. 3